# EUROPÄISCHE PATENTANMELDUNG

(11) **EP 1 475 722 A1**
(43) Veröffentlichungstag der Anmeldung: **10.11.2004**
(21) Anmeldenummer: 03010156.2
(22) Anmeldetag: 06.05.2003
(51) Int. Cl.: G06F 17/21, G06F 3/12

(54) **Drucksteuersystem**

(71) Anmelder: Warttmann, Rudi, 72622 Nürtingen (DE)
(72) Erfinder: Warttmann, Rudi, 72622 Nürtingen (DE)
(74) Vertreter: Ruckh, Rainer Gerhard, Dr.

(57) **Zusammenfassung**

Die Erfindung betrifft ein Drucksteuersystem (1) zur Herstellung eines Satzes. Es weist Mittel zur Generierung eines Satzprogramms (3), eine Treibereinheit (4) zur Generierung eines ausgabespezifischen Endprodukts und ein Ausgabegerät (5) zur Generierung des Satzes als Ausgabeergebnis auf. Es ist wenigstens ein Programm-Modul (7, 7') zur Generierung von Formelsätzen als Bestandteil des Satzprogramms (3) vorgesehen.

## Beschreibung

Die Erfindung betrifft ein Drucksteuersystem gemäß dem Oberbegriff des Anspruchs 1.

Derartige Drucksteuersysteme dienen zur Herstellung von Sätzen, insbesondere von Buchsätzen. Zur Generierung eines derartigen Buchsatzes wird typischerweise zunächst ein Manuskript mittels eines Textverarbeitungsprogramms erfasst. Der so generierte Text wird dann in ein Satzprogramm übertragen, wobei mit diesem die für den Druck gewünschten Formate wie Seitenaufteilungen des Textes, Schriftarten und gegebenenfalls Einbinden von Graphiken in dem Text vorgenommen werden.

Mit dem Satzprogramm wird dann über eine Treibereinheit ein Ausgabegerät angesteuert um den Buchsatz als Ausgabeergebnis zu generieren. Ein Beispiel für ein derartiges Ausgabegerät ist eine Digitaldruckmaschine. In diesem Fall werden mit der Treibereinheit Bitmaps als ausgabespezifische Endprodukte generiert, mittels derer die Digitaldruckmaschine das Ausgabeergebnis generiert.

Bei der Herstellung von Buchsätzen für wissenschaftliche Bücher und Schulbücher, insbesondere in den Bereichen der Mathematik und Physik, sind in den jeweiligen Texten Formeln enthalten, die typischerweise neben spezifischen Sonderzeichen auch Brüche und dergleichen enthalten.

Derartige Formelsätze weisen einen individuellen und oft komplexen Aufbau auf. Zur Generierung derartiger Formelsätze werden Spezialprogramme verwendet, die in Formeleditoren die Formelsätze in der gewünschten Formatierung erstellen.

Diese Spezialprogramme werden über Import- und Konvertierungsmechanismen in das Satzprogramm eingebunden. Die Spezialprogramme einerseits und das Satzprogramm andererseits bilden unterschiedliche Programme mit dementsprechend unterschiedlichen Datentypen.

Dadurch entsteht das Problem, dass die die Formelsätze definierenden Parameter mitgeführt und an das Satzprogramm übergeben werden müssen. Dies wiederum birgt die Gefahr von Inkompatibilitäten derartiger Daten und Parameter in den einzelnen Programmen.

Bei Vorliegen derartiger Inkompatibilitäten treten Fehler in den Ausgabeergebnissen auf. Damit sind Produktionsverzögerungen und Maschinenstillstände verbunden die zu einer unerwünschten Reduzierung der Produktivität bei der Herstellung von Sätzen führen.

Der Erfindung liegt die Aufgabe zugrunde ein Drucksteuersystem bereitzustellen, mit welchem eine hohe Produktivität bei der Herstellung von Sätzen erzielt wird.

Zur Lösung dieser Aufgabe sind die Merkmale des Anspruchs 1 vorgesehen. Vorteilhafte Ausführungsformen und zweckmäßige Weiterbildungen der Erfindung sind in den Unteransprüchen beschrieben.

Das erfindungsgemäße Drucksteuersystem dient zur Herstellung eines Satzes und weist Mittel zur Generierung eines Satzprogramms, sowie eine Treibereinheit zur Generierung eines ausgabespezifischen Endprodukts mittels des Satzprogramms auf. Das ausgabespezifische Endprodukt wird in einem Ausgabegerät zur Generierung des Satzes als Ausgabeergebnis weiterverarbeitet. Wenigstens ein Programm-Modul des Satzprogramms dient zur Generierung von Formelsätzen.

Der Grundgedanke der Erfindung besteht somit darin, Programm-Module zur Generierung von Formelsätzen in das Satzprogramm einzubinden. Aufgrundessen entfallen Schnittstellen- oder Inkompatibilitätsprobleme bei der Generierung von mathematischen, physikalischen Formeln und dergleichen in den Texten von Sätzen wie zum Beispiel Buchsätzen. Dementsprechend werden durch Inkompatibilitäten von Daten oder Parametern unterschiedlicher Programme bedingte Maschinenstillstände oder fehlerhafte Ausgabeergebnisse bei der Generierung von Sätzen vermieden, wodurch die Produktivität bei der Herstellung von Sätzen erheblich erhöht wird.

In einer vorteilhaften Ausführungsform sind mehrere Programm-Module vorgesehen, welche als plug-in-Module im Satzprogramm integriert sind.

Ein erstes Programm-Modul bildet ein Steuerungsmodul. In diesem sind sämtliche Einstellwerte hinterlegt, welche die Darstellungen der zu generierenden Formelsätze definieren. Weiterhin sind in dem Steuerungsmodul Einstellwerte für die Ausgabegeräte hinterlegt. Zusätzlich sind in dem Steuerungsmodul anwenderspezifische Sonderzeichen hinterlegt, welche insbesondere als Steuerzeichen zur Generierung bestimmter Darstellungen von Formelzeichen in dem jeweiligen Satz dienen.

In dem Steuerungsmodul sind somit zentral sämtliche Voreinstellungen für die zu generierenden Formelsätze sowie die relevanten Schnittstellendaten für die anzusteuernden Ausgabegeräte enthalten. Diese Daten können von den einzelnen Anwendern aus dem Steuerungsmodul ausgelesen werden.

Mit diesem Steuerungsmodul wird somit einheitlicher Produktionsfluss bei der Herstellung der Sätze gewährleistet, wobei die Sätze generell mit unterschiedlichen Ausgabegeräten wie Druckern, Filmbelichtern, Computer-to-Plate Belichtern oder Digitaldruckmaschinen erstellt werden können. Prinzipiell können auch elektronische Veröffentlichungsformen der Sätze wie zum Beispiel im Internet oder das so genannte eBook gewählt werden.

Die weiteren Programm-Module nutzen das Steuerungsmodul und die darin hinterlegten Einstellwerte zur Generierung bestimmter Formelzeichen. Derartige Programm-Module können insbesondere als Module zur Generierung von Brüchen ausgebildet sein.

In einer ersten Ausführungsform werden in den jeweiligen Texten der zu erstellenden Sätze mit in dem Steuerungsmodul hinterlegten Sonderzeichen Brüche definierende Sequenzen vorgegeben. Die Brüche werden dann vom Benutzer markiert. Anschließend wird das jeweilige Programm-Modul aktiviert, worauf mit diesem eine Darstellung des Bruches gemäß den in dem Steuerungsmodul generierten Einstellwerten erzeugt wird.

In einer weiteren besonders vorteilhaften Ausführungsform der Erfindung sind Programm-Module vorgesehen, mittels derer eine selbsttätige Generierung von Darstellungen von Brüchen ermöglicht wird. Diese Programm-Module sind derartig ausgebildet, dass mit diesen in dem Text des zu erstellenden Satzes vorgegebene Brüche definierende Zeichenfolgen gesucht werden, welche dann selbsttätig in durch die im Steuerungsmodul hinterlegten Einstellwerte definierten Darstellungen von Brüchen umgesetzt werden.

Weiterhin können als Programm-Module Module zur Generierung von Kettenbrüchen oder von Brüchen in Form von Binominalkoeffizienten vorgesehen sein.

Zudem können als weitere Programm-Module Module zur Generierung von Klammern oder klammerartigen Zeichen wie zum Beispiel Betragsstrichen vorgesehen sein. Mit derartigen Programm-Modulen werden in den jeweiligen Texten vorhandene Klammern oder dergleichen durch anwenderspezifische Darstellungen von Klammern oder dergleichen ersetzt, die wiederum durch die Einstellwerte im Steuerungsmodul definiert sind.

Weiterhin können als Programm-Module Module zur Generierung von Wurzeln oder von Überstrichen wie zum Beispiel Vektorpfeilen vorgesehen sein.

Schließlich könne als Programm-Module zur Generierung von Summen- und Integralausdrücken vorgesehen sein.

Die Programm-Module weisen somit einen modularen Aufbau auf, welcher bei Bedarf erweiterbar ist. Mit dem Programm-Modul können somit auch komplexe Formelsätze dargestellt werden.

Die Erfindung wird im Nachstehenden anhand der Zeichnungen erläutert. Es zeigen:
- Figur 1:: Blockschaltbild eines Ausführungsbeispiels eines Drucksteuersystems.
- Figur 2:: Schematische Darstellung von Komponenten eines Satzprogramms für das Drucksteuersystem gemäß Figur 1.

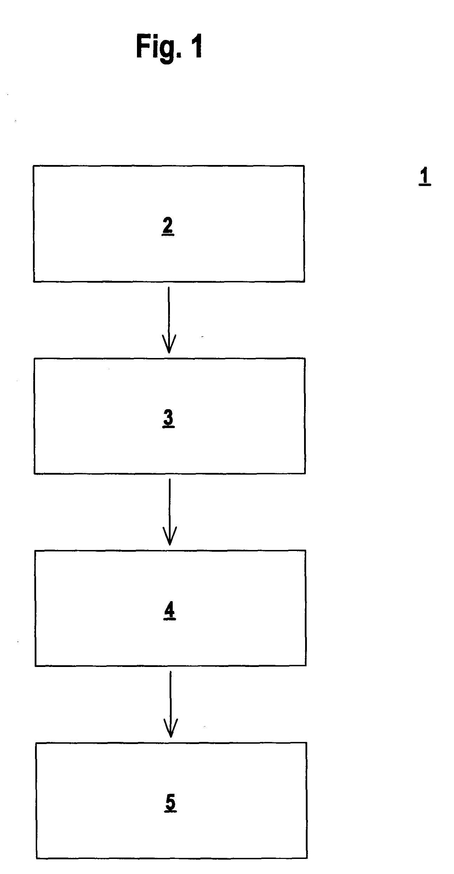

Figur 1 zeigt schematisch den Aufbau eines Drucksteuersystems 1 zur Herstellung eines Satzes. Der Satz kann insbesondere von einem Buchsatz gebildet sein. Generell enthält der Text des Satzes Formeln wie zum Beispiel mathematische oder physikalische Formeln.

Ein Text wird als Manuskript zunächst in einem Textverarbeitungsprogramm 2 erfasst, welches auf einer nicht dargestellten Rechnereinheit implementiert ist.

Der auf diese Weise erfasste Text wird mittels geeigneter Import- und Filtermeachanismen in ein Satzprogramm 3 übertragen. Im vorliegenden Fall wird als Satzprogramm 3 das unter dem Markennamen Adobe ® In Design ® vertriebene Programm verwendet. Dieses Satzprogramm 3 ist auf derselben oder auf einer weiteren Rechnereinheit implementiert. Mit dem Satzprogramm 3 werden die Formatierungen des Textes für den zu erstellenden Druck des Buchsatzes generiert, d. h. insbesondere die jeweiligen Seiteneinteilungen und Seitenformatierungen inklusive des gewünschten Druckbildes mit den hierfür vorgesehenen Schrifttypen und dergleichen.

In Verbindung mit dem Satzprogramm 3 wird in einer Treibereinheit 4 ein ausgabespezifisches Endprodukt generiert, welches in einem Ausgabegerät 5 zur Generierung eines den Satz bildenden Ausgabeergebnisses weiterverarbeitet wird. Im vorliegenden Fall besteht die Treibereinheit 4 aus einer Treibersoftware.

Im vorliegenden Ausführungsbeispiel ist als Ausgabegerät 5 eine Digitaldruckmaschine vorgesehen, die Bitmaps als ausgabespezifische Endprodukte zu dem das Ausgabeergebnis bildenden fertigen Druck des Satzes weiterverarbeitet.

Alternativ können ausgabespezifische Endprodukte in Form von Bitmaps auch von einem Drucker, insbesondere einem Farb-Laserdrucker weiterverarbeitet werden.

Weiterhin können mit der Treibereinheit 4 als ausgabespezifische Endprodukte Offset-Filme erzeugt werden, die in Filmbelichtern als Ausgabegeräte 5 weiterverarbeitet werden.

Schließlich können mit der Treibereinheit 4 als ausgabespezifische Endprodukte Druckplatten erstellt werden, die in Computer-to-Plate-Belichtern als Ausgabegeräte 5 weiterverarbeitet werden.

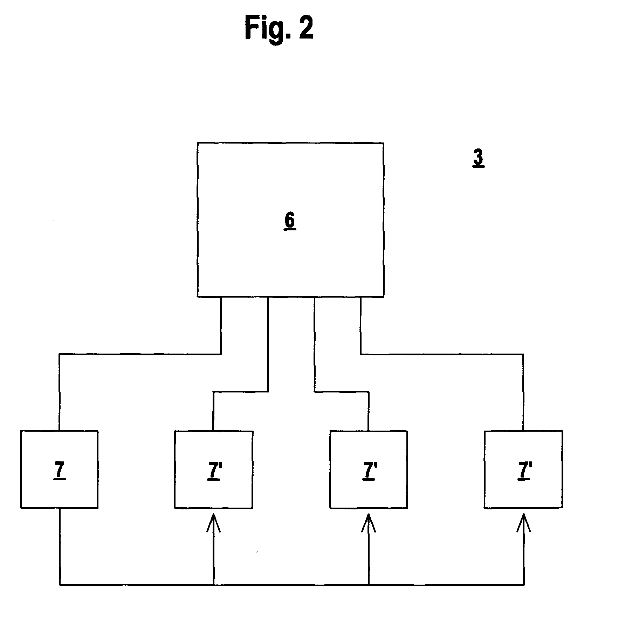

Figur 2 zeigt schematisch den Aufbau des Satzprogramms 3. Das Satzprogramm 3 besteht im Wesentlichen aus einem selbstständig lauffähigen Kern 6 und mehreren nicht selbstständig lauffähigen plug-in-Modulen, die beim Compilieren des Satzprogramms 3 zusammen mit dem Kern 6 übersetzt werden und somit wie der Kern 6 Bestandteil des Satzprogramms 3 werden.

Die einzelnen plug-in-Module dienen zur Bereitstellung unterschiedlicher Funktionen des Satzprogramms 3. In Figur 2 sind als plug-in-Module Programm-Module 7, 7' Module zur Generierung von Formelsätzen innerhalb des Buchsatzes dargestellt. Üblicherweise weist das Satzprogramm 3 eine Vielzahl weiterer plug-in-Module auf, die in Figur 2 nicht gesondert dargestellt sind.

Ein Programm-Modul 7 bildet ein Steuerungsmodul. In diesem Steuerungsmodul sind unterschiedliche Einstellwerte für die anzusteuernden Ausgabegeräte 5 hinterlegt. Weiterhin sind in dem Steuerungsmodul Einstellwerte für die zu generierenden Formelsätze hinterlegt. Diese Einstellwerte legen im Wesentlichen die Darstellungsformen von Formeln und Formelzeichen fest. Weiterhin können in dem Steuerungsmodul Sonderzeichen zur Kennzeichnung mathematischer, physikalischer Größen hinterlegt werden. Zudem können auch Sonderzeichen als Steuerzeichen zur Generierung von Darstellungen von Formelzeichen hinterlegt werden. Derartige Sonderzeichen können generell anwenderspezifisch definiert werden. Schließlich können auch weitere Parameter wie Serialisierungen in das Steuerungsmodul übernommen werden.

Die im Steuerungsmodul hinterlegten Parameter werden vorzugsweise in einer XML-Datei abgespeichert, die unter den einzelnen Anwendern ausgetauscht werden um einen einheitlichen Produktionsprozess bei der Herstellung von Sätzen zu gewährleisten.

Durch die Abspeicherung der die Darstellungsformen der Formelsätze definierenden Einstellwerte in der XML-Datei ist gewährleistet, dass die Darstellungsformen der Formelsätze unabhängig von der jeweiligen anwenderspezifischen Applikation sind. Durch die Speicherung der Einstellwerte für die Ausgabegeräte 5 wird zudem eine universelle Schnittstelle an die externen Einheiten bereitgestellt. Die in der XML-Datei hinterlegten Daten können von den einzelnen Anwendern ausgelesen werden, wodurch ein einheitlicher Produktionsfluss bei der Herstellung von Sätzen gewährleistet ist. Für den Auslesevorgang kann insbesondere ein separates Programm-Modul 7' vorgesehen sein.

Die weiteren Programm-Module 7' dienen zur Generierung von bestimmten Formelzeichen. Dabei nutzen diese Programm-Module 7' die in dem Steuerungsmodul hinterlegten Einstellwerte und Sonderzeichen. Das Steuerungsmodul dient somit zur zentralen Steuerung dieser Programm-Module 7', wodurch eine einheitliche Generierung von Formelsätzen im jeweiligen Buchsatz gewährleistet ist.

Ein erstes Beispiel eines derartigen Programm-Moduls 7' ist ein Modul zur Generierung von Brüchen. Der Anwender des Satzprogramms 3 gibt innerhalb des Textes einen Textrahmen vor. Der Bruch innerhalb des Textrahmens wird durch den Zähler und Nenner definiert, welche durch ein definiertes, in dem Steuerungsmodul hinterlegtes Sonderzeichen als Steuerzeichen getrennt sind. Der Anwender markiert den so ausgebildeten Bruch und löst dann das Programm-Modul 7' aus. Das Programm-Modul 7' generiert dann aus diesem Bruch eine Bruchdarstellung gemäß den in dem Steuerungsmodul abgespeicherten Einstellwerten.

Dabei passt das Programm-Modul 7' die Bruchdarstellung in den Textrahmen ein und berechnet hierzu die Breite des Zählers bzw. des Nenners auf der Basis der ebenfalls abgespeicherten Schriftinformationen wie zum Beispiel Schriftart, Schriftgröße, Schriftstil, Schriftbreite und -höhe sowie Laufweite, für die Darstellung des Zählers bzw. des Nenners. Die Breite des Bruchstriches wird an die Breiten des Zählers und des Nenners angepasst.

Insbesondere zur Generierung komplexerer Brüche kann ein hierzu abgewandtes Programm-Modul 7' eingesetzt werden. Im Gegensatz zu dem vorgenannten Programm-Modul 7' wird in diesem Fall der Textrahmen vom Programm-Modul 7' bestimmt, wobei diesem als sogenannter "eingebetteter Rahmen" im Fließtext mitläuft. Bei den generierten Brüchen stehen der Zähler, der Bruchstrich und der Nenner jeweils getrennt durch ein Absatzzeichen in separaten Zeilen.

Ein weiteres Beispiel für ein Programm-Modul 7' ist ein Modul zur Generierung spezieller Brüche wie zum Beispiel Binominalkoeffizienten oder Kettenbrüchen. Im Fall von Kettenbrüchen sind die einzelnen Kettenbruchzähler und - nenner durch anwenderspezifische, im Steuerungsmodul hinterlegte Sonderzeichen als Steuerzeichen getrennt. Der so definierte Kettenbruch wird wiederum vom Anwender markiert. Darauf löst dieser das Programm-Modul 7' aus, wodurch eine Kettenbruchdarstellung gemäß dem in den Steuerungsmodul gespeicherten Einstellwerten generiert wird.

Weiterhin können auch Programm-Module 7' zur selbsttätigen Generierung von Brüchen vorgesehen sein. Die Brüche werden in dem Text von dem Programm-Modul 7' anhand einer individuellen, vorgegebenen Zeichenfolge identifiziert und dann selbsttätig in Bruchdarstellungen umgewandelt, die wieder durch die Einstellwerte im Steuerungsmodul definiert sind. Zweckmäßigerweise ist ein Bruch innerhalb des Textes durch folgende Zeichenfolge definiert:
Leerzeichen-Zählerzeichen-Schrägstrich-Nennerzeichen-Leerzeichen
wobei die Zähler- und Nennerzeichen von beliebigen alfanumerischen Zeichen gebildet sein können.

Als weiteres Programm-Modul 7' kann ein Modul zur Generierung von Darstellungen von Wurzel-Zeichen vorgesehen sein. In diesem Fall markiert der Anwender im Text den jeweiligen Radikanten und löst dann das Programm-Modul 7' aus. Das Programm-Modul 7' generiert dann die Darstellung eines Wurzelzeichens entsprechend den Einstellwerten im Steuerungsmodul. Weiterhin kann mit dem Programm-Modul 7' bei Bedarf ein Wurzelexponent hinzugefügt werden.

Ein weiteres Programm-Modul 7'ist als Modul zur Generierung von Klammern und klammerartigen Zeichen wie zum Beispiel Betragsstrichen ausgebildet. Im Fall der Generierung von Klammerdarstellungen werden mittels des Programm-Moduls 7' Klammern innerhalb des Textes gegen Klammerdarstellungen gemäß den in dem Steuerungsmodul vorgegebenen Einstellwerten ausgetauscht. Besonders vorteilhaft ist dabei, dass mit dem Programm-Modul 7' eine Plausibilitätsprüfung durchgeführt wird, mit welcher die korrekte Zuordnung jeweils einer öffnenden Klammer zu einer schließenden Klammer überprüft wird. Zur Generierung der Klammerdarstellungen muss von dem Anwender lediglich die öffnende Klammer markiert und das Programm-Modul 7' ausgelöst werden. Das Programm-Modul 7' ersetzt dann sowohl die öffnende als auch die zugeordnete schließende Klammer jeweils durch eine Klammerdarstellung gemäß den Einstellwerten in dem Steuerungsmodul.

Schließlich ist ein Programm-Modul 7' zur Generierung von Überstrichen auf Textzeichen vorgesehen. Die Überstriche können oberhalb, unterhalb oder innerhalb von Textzeichen verlaufen. Ein Überstrich kann dabei längs in einer Geraden verlaufen oder bogenförmig ausgebildet sein. Der Anwender markiert das oder die Textzeichen, an welchen der Überstrich angebracht werden soll und löst das Programm-Modul 7' aus. In dem Programm-Modul 7' wird dann die Breite des zu überstreichenden Textes berechnet und der Überstrich in der entsprechenden Länge generiert. Besonders vorteilhaft wird in dem Programm-Modul 7' zudem auch die Höhe des zu überstreichenden Textes berechnet, sodass in Abhängigkeit hiervon die Lage des Überstriches angepasst werden kann.

Vorzugsweise weist das Programm-Modul 7' ein Teilmodul auf, mit welchem als spezielle Überstriche Vektorpfeile generiert werden. Die Ausbildung und Lage des Pfeilsymbols ist wiederum durch Einstellwerte in dem Steuerungsmodul vorgebbar.

Als weiteres Programm-Modul 7' ist ein Modul zur Generierung von mathematischen Summen- und Integralausdrücken vorgesehen. Zweckmäßigerweise weist das Programm-Modul ein erstes Teilmodul zur Generierung von Summenausdrücken aus einem im Text enthaltenen Ausdruck mit vorgegebener Syntax auf. Der gemäß den Einstellwerten im Steuerungsmodul generierte Summenausdruck enthält ein Summenzeichen in Form eines großen Sigmas, an dessen Unterseite die Parameter für die Ober- und Untergrenzen der durchzuführenden Summation eingefügt werden.

In entsprechender Weise wird in einem zweiten Teilmodul ein Integrationsausdruck mit einem durch Einstellwerte im Steuerungsmodul definierten Integralzeichen generiert.

Alternativ oder zusätzlich zu den Summenausdrücken können mit dem Programm-Modul 7' auch Produktausdrücke generiert werden. Diese weisen im Wesentlichen denselben Aufbau wie die Summenausdrücke auf, wobei lediglich das Summenzeichen durch ein Produktzeichen, insbesondere ein großes Pi ersetzt ist.

### Bezugszeichenliste

- (1): Drucksteuersystem
- (2): Textverarbeitungsprogramm
- (3): Satzprogramm
- (4): Treibereinheit
- (5): Ausgabeeinheit
- (6): Kern
- (7): Programm-Modul
- (7'): Programm-Modul

## Patentansprüche

1. Drucksteuersystem zur Herstellung eines Satzes mit Mitteln zur Generierung eines Satzprogramms, mit einer Treibereinheit zur Generierung eines ausgabespezifischen Endprodukts mittels des Satzprogramms, wobei das ausgabespezifische Endprodukt in einem Ausgabegerät zur Generierung des Satzes als Ausgabeergebnis verarbeitbar ist, **dadurch gekennzeichnet, dass** wenigstens ein Programm-Modul (7, 7') zur Generierung von Formelsätzen Bestandteil des Satzprogramms (3) ist.

2. Drucksteuersystem nach Anspruch 1, **dadurch gekennzeichnet, dass** der Satz von einem Buchsatz gebildet ist.

3. Drucksteuersystem nach einem der Ansprüche 1 oder 2, **dadurch gekennzeichnet, dass** das ausgabespezifische Endprodukt als Bitmap für einen das Ausgabegerät (5) bildenden Drucker ausgebildet ist.

4. Drucksteuersystem nach einem der Ansprüche 1 oder 2, **dadurch gekennzeichnet, dass** das ausgabespezifische Endprodukt als Bitmap für eine das Ausgabegerät (5) bildende Digitaldruckmaschine ausgebildet ist.

5. Drucksteuersystem nach einem der Ansprüche 1 oder 2, **dadurch gekennzeichnet, dass** das ausgabespezifische Endprodukt als Offset-Film für einen das Ausgabegerät (5) bildenden Filmbelichter ausgebildet ist.

6. Drucksteuersystem nach einem der Ansprüche 1 oder 2, **dadurch gekennzeichnet, dass** das ausgabespezifische Endprodukt als Druckplatte für einen das Ausgabegerät (5) bildenden Computer-to-Plate-Belichter ausgebildet ist.

7. Drucksteuersystem nach einem der Ansprüche 1 - 6, **dadurch gekennzeichnet, dass** das oder jedes Programm-Modul (7, 7') ein plug-in-Modul des Satzprogramms (3) bildet.

8. Drucksteuersystem nach einem der Ansprüche 1 - 7, **dadurch gekennzeichnet, dass** als Programm-Modul (7, 7') ein Steuerungsmodul vorgesehen ist, in welchem Einstellwerte betreffend die Zeichen der Formelsätze und/oder die Ausgabegeräte (5) sowie Sonderzeichen vorgegeben sind.

9. Drucksteuersystem nach Anspruch 8, **dadurch gekennzeichnet, dass** die Einstellwerte und Sonderzeichen als XML-Datei abgespeichert sind.

10. Drucksteuersystem nach Anspruch 9, **dadurch gekennzeichnet, dass** die Einstellwerte und Sonderzeichen aus dem Steuerungsmodul auslesbar sind.

11. Drucksteuersystem nach Anspruch 7 - 10, **dadurch gekennzeichnet, dass** dieses weitere Programm-Module (7, 7') zur Generierung von Zeichen und/oder Darstelllungen von Formelzeichen aufweist, welche durch die Einstellwerte im Steuerungsmodul bestimmt sind.

12. Drucksteuersystem nach Anspruch 11, **dadurch gekennzeichnet, dass** im Steuerungsmodul abgespeicherte Sonderzeichen Steuerzeichen zur Generierung der Zeichen und/oder Darstellungen von Formeln bilden.

13. Drucksteuersystem nach einem der Ansprüche 11 oder 12, **dadurch gekennzeichnet, dass** als Programm-Modul (7, 7') wenigstens ein Modul zur Generierung von Brüchen vorgesehen ist.

14. Drucksteuersystem nach Anspruch 13, **dadurch gekennzeichnet, dass** in einem Text der Zähler und der Nenner eines Bruches durch ein frei wählbares Sonderzeichen getrennt sind.

15. Drucksteuersystem nach Anspruch 14, **dadurch gekennzeichnet, dass** ein Bruch durch eine Benutzereingabe markierbar ist.

16. Drucksteuersystem nach Anspruch 15, **dadurch gekennzeichnet, dass** durch eine Benutzereingabe das Modul zur Generierung von Brüchen aktivierbar ist, wodurch ein in einem Text markierter Bruch in eine Bruchdarstellung gemäß den Einstellwerten in dem Steuerungsmodul umgesetzt wird.

17. Drucksteuersystem nach Anspruch 16, **dadurch gekennzeichnet, dass** der Textrahmen, innerhalb dessen die Bruchdarstellung generiert wird, durch eine Benutzereingabe definiert ist.

18. Drucksteuersystem nach Anspruch 17, **dadurch gekennzeichnet, dass** der Textrahmen, innerhalb dessen die Bruchdarstellung generiert wird, durch das Modul zur Generierung von Brüchen definiert wird.

19. Drucksteuersystem nach einem der Ansprüche 11 oder 12, **dadurch gekennzeichnet, dass** als Programm-Modul (7, 7') ein Modul zur Generierung von Brüchen vorgesehen ist, mittels dessen selbsttätig aus einem Text ein Bruch identifizierbar und in eine Bruchdarstellung umsetzbar ist.

20. Drucksteuersystem nach Anspruch 19, **dadurch gekennzeichnet, dass** ein Bruch durch eine Zeichenfolge bestehend aus einem Leerzeichen, einem Zählerzeichen, einem Schrägstrich, einem Nennerzeichen und einem Leerzeichen definiert ist.

21. Drucksteuersystem nach einem der Ansprüche 11 oder 12, **dadurch gekennzeichnet, dass** als Programm-Module (7, 7') Module zur Generierung von Brüchen vorgesehen sind, mittels derer Bruchdarstellungen in Form von Binominalkoeffizienten oder Kettenbrüchen generierbar sind.

22. Drucksteuersystem nach einem der Ansprüche 11 - 21, **dadurch gekennzeichnet, dass** als Programm-Modul (7, 7') ein Modul zur Generierung von Darstellungen von Wurzel-Zeichen vorgesehen ist.

23. Drucksteuersystem nach einem der Ansprüche 11 - 22, **dadurch gekennzeichnet, dass** als Programm-Modul (7, 7') wenigstens ein Modul zur Generierung von Darstellungen von Klammern oder von klammerartigen Zeichen vorgesehen ist.

24. Drucksteuersystem nach Anspruch 23, **dadurch gekennzeichnet, dass** mit dem Programm-Modul (7, 7') eine Plausibilitätskontrolle durchführbar ist, in dem überprüft wird, ob jeder öffnenden Klammer eine schließende Klammer zugeordnet ist.

25. Drucksteuersystem nach einem der Ansprüche 23 oder 24, **dadurch gekennzeichnet, dass** die klammerartigen Zeichen von Betragszeichen gebildet sind.

26. Drucksteuersystem nach einem der Ansprüche 11 - 25, **dadurch gekennzeichnet, dass** als Programm-Modul (7, 7') wenigstens ein Modul zur Generierung von Überstrichen auf Textzeichen vorgesehen ist.

27. Drucksteuersystem nach Anspruch 26, **dadurch gekennzeichnet, dass** ein Überstrich oberhalb, unterhalb oder innerhalb eines Textzeichens verläuft.

28. Drucksteuersystem nach einem der Ansprüche 26 oder 27, **dadurch gekennzeichnet, dass** die Überstriche als Vektorpfeile ausgebildet sind.

29. Drucksteuersystem nach Anspruch 28, **dadurch gekennzeichnet, dass** die Überstriche als Bögen ausgebildet sind.

30. Drucksteuersystem nach einem der Ansprüche 11 -29, **dadurch gekennzeichnet, dass** als Programm-Module (7, 7') wenigstens im Modul zur Generierung von Summen- und Integralausdrücken vorgesehen ist.
